# EUROPEAN PATENT APPLICATION

(11) **EP 0 732 187 A1**
(43) Date of publication of application: **18.09.1996**
(21) Application number: 95500096.3
(22) Date of filing: 03.07.1995
(51) Int. Cl.: B29C 49/00

(54) **Preform with integrated handle for containers obtained by injection blow moulding or by bioriented injection blow moulding**

(30) Priority: 15.03.1995 ES 9500300
(71) Applicant: Santoyo Padilla, Jose, E-08186 Llia D'Aumunt (Barcelona) (ES)
(72) Inventor: Santoyo Padilla, Jose, E-08186 Llia D'Aumunt (Barcelona) (ES)
(74) Representative: Perez Bonal, Bernardo

(57) **Abstract**

A preform formed by injection moulding a plastic or similary transformable material that after its expansion by blowing forms a container, and that presents as a special feature the integration of the handle of the container in the body of the preform, making a sole whole from the same material, facilitating the process of obtaining the container and its later recycling.

## Description

### OBJECTIVE OF THE INVENTION

The present invention refers to a plastic or similary transformable material conceived especially for the obtaining of containers with handles, that as a special feature offers the premould shape with the body and the handle that is going to create the handle of the bottle, in this way moulding the premould as a sole integrated body. This premould is of the type obtained by blown injection.

Likewise it is a question of helping the recycled conditions of the bottle by forming the body and the handle from the same material.

### BACKGROUND TO THE INVENTION

Plastic bottles are generally shaped by the blown technique with the premould previously being formed by injecting the form of the bottle one is trying to obtain. It is then heated and streched by blowing inside a casting mould or cavity of coincidentally determined forms with the special image of the body, obtainig said bottle with a greater size to the initial premould from which it was split, which would be limited by the casting mould.

This fabrication procedure of plastic containers is only concerned with the obtainig of the body of the bottle. In the case of plastic containers with handle, such as high capacity bottles and other products, the fabrication of the handle is achieved separately, and the jointment of both elements is carried out by coupling.

Generally the handle is shaped in a distinct material from the bottle, which makes it convenient for the process of recylcling the plastic material because of the need to carry out the separation between the two components in independent ways.

At present no fabrication procedure is known where the handle is integrated in the plastic premould from which the invention that is going to be described is made feasible.

### DESCRIPTION OF THE INVENTION

The present invention ends up by perfecting the production conditions of plastic or containers of a similary transformable material that incorporates a handle, as well as the conditions of recycling the plastic material employed in its shape, by means of the adoption of a premould that integrates the handle with the body that will make up the body of the bottle once the premould has been expanded by the blowing procedure.

Likewise a reduction of costs is achieved as a consequence of producing the body and the handle in one piece.

To obtain whatever form of the handle and bottle the premould is shaped by injecting the desired outline. The size is increased after being heated and streched by introducing into the interior of a conformed casting mould the adecuate dimensions and structure to make up the top of the premould expand. In this way the bottle and the handle are formed in the same material.

After the rest of the whole has been expanded the handle is shaped in the premould with the form and dimensions that one is trying to achieve. It is inclined to protrude from the body of the bottle perpendiculary or sloping on its own.

The obtaining procedure of the container formed of body and handle can be made by blown injection, or by blown biorientated injection.

### DESCRIPTIONS OF THE DRAWINGS

To complement the description that is being made and with the object of helping towards a better understanding of the futures of the invention, the present descriptive is accompanied by, as an integral part, a set of plans where with an illustrative and not limited character the following have been represented:

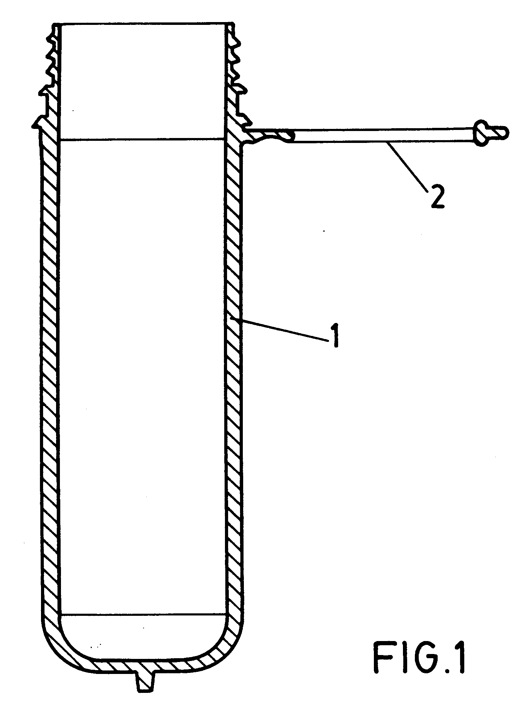

Figure 1 shows a side elevational view of the premould with integrated handle for containers obtained by blown injection or by blown biorientated injection.

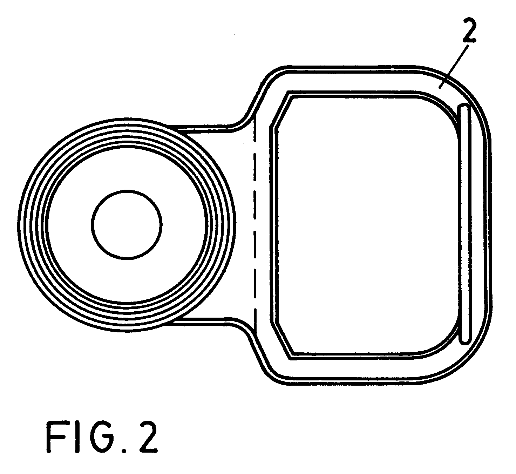

Figure 2 shows a plant view of the premould with integrated handle for containers obtained by blown injection or by blown biorientated injection.

### PREFERRED EMBODIMENT OF THE INVENTION

As can be seen from the figures a practical example of a possible embodiment of the invention is described which is consistent in the premould with integrated handle for containers obtained by blown injection, or by blown biorientated injection that is constituted by a body (1), that once expanded by blowing after a previous heating, shapes the body of the bottle, and an integrated handle (2) in the same body (1) forming a whole. The handle protrude in respect to the body (1) in the proximities of the neck of the bottle.

Constituents of the premould, like the handle (2) and the body (1) are manufactured with the same material and with the form required for obtaining the bottle after its blown expansion making the integration of the handle in respect to the rest of the whole possible with a certain inclination.

The invention is a applicable for plastic or other types of similary transformable materials, making sure that the handle and the body of the premould are made from the same material. In this way the recycling process is helped.

It is not considered necessary to make the description more extensive as whatever expert in the material can fully grasp the importance and advantages of the invention.

The materials, form, size and disposition of the elements will always be susceptable to variation always when the essential features of the invention are not altered.

The terms in which this paper have been described should always be taken in a broad and never limited sense.

## Claims

1. Premould with integrated handle for containers obtained by blown injection or by blown biorientated injection is essentially characterized in that it is made up a body and an integrated handle in said body costituting a whole that once expanded by blowing, after its previous heating, forms the container.

2. Premould with integrated handle for containers obtained by blown injection or by blown biorientated injection is characterized in that the bady and the handle constituents of the premould are formed with the same material and form a sole piece.

3. Premould with integrated handle for containers obtained by blown injection or by blown biorienated injection is charaterized in that the handle is integrated in the premould with whatever orientation in respect to the body of the said premould.

4. Premould with integrated handle for containers obtained by blown injection or by blown biorienated injection.

## Amended claims

### Amended claims in accordance with Rule 86(2) EPC.

1. Premould with integrated handle for containers obtained by blown injection or by blown bioriented injection which is made up of a body and an integral handle in said body, both of the same material, constituting a whole that once expanded by blowing, after its previous heating forms a container, esentially characterized in that the handle includes a folding slot near the body in order to integrate the handle be integrated in the premould, with whatever orientation in respect to the body of said premould.
